(19) Europäisches Patentamt

European Patent Office

Office européen des brevets

(11) **EP 0 978 128 B1**

(12) **EUROPÄISCHE PATENTSCHRIFT**

(45) Veröffentlichungstag und Bekanntmachung des Hinweises auf die Patenterteilung:
**05.02.2003 Patentblatt 2003/06**

(51) Int Cl.⁷: **H01B 7/29**, C08K 3/22, H01B 3/46

(21) Anmeldenummer: **98924199.7**

(22) Anmeldetag: **24.04.1998**

(86) Internationale Anmeldenummer:
**PCT/EP98/02440**

(87) Internationale Veröffentlichungsnummer:
**WO 98/049693 (05.11.1998 Gazette 1998/44)**

(54) **FLAMMWIDRIGE ZUSAMMENSETZUNG ZUR HERSTELLUNG VON ELEKTRISCHEN KABELN MIT ISOLATIONS- UND/ODER FUNKTIONSERHALT**

FLAME RESISTANT COMPOUND FOR MAKING ELECTRIC CABLES WITH PRESERVED INSULATION AND FUNCTION

COMPOSE ININFLAMMABLE POUR LA FABRICATION DE CABLES ELECTRIQUES AUX FINS DE PRESERVATION DE LEUR ISOLANT ET/OU FONCTION

(84) Benannte Vertragsstaaten:
**AT BE CH DE GB IE LI LU NL**

(30) Priorität: **25.04.1997 DE 19717645**

(43) Veröffentlichungstag der Anmeldung:
**09.02.2000 Patentblatt 2000/06**

(73) Patentinhaber: **DÄTWYLER AG KABEL + SYSTEME CH-6460 Altdorf (CH)**

(72) Erfinder:
• **STRAUSS, Jürgen**
  **CH-6467 Schattdorf (CH)**
• **BAYARD, Konstantin**
  **CH-6467 Schattdorf (CH)**
• **WALKER, Rudolf**
  **CH-6463 Bürglen (CH)**
• **DITTLI, Beat**
  **CH-6460 Altdorf (CH)**
• **BISSIG, André**
  **CH-6465 Unterschächen (CH)**
• **KLEIN, Uwe**
  **D-40229 Düsseldorf (DE)**

(74) Vertreter:
**von Samson-Himmelstjerna, Friedrich R., Dipl.-Phys. et al
SAMSON & PARTNER
Widenmayerstrasse 5
80538 München (DE)**

(56) Entgegenhaltungen:
EP-A- 0 708 455          WO-A-86/03329
FR-A- 2 450 855          FR-A- 2 451 387

• DATABASE WPI Section Ch, Week 9344 Derwent Publications Ltd., London, GB; Class A26, AN 93-348212 XP002074739 & JP 05 254 912 A (SUMITOMO ELECTRIC CO)
• DATABASE WPI Section Ch, Week 7813 Derwent Publications Ltd., London, GB; Class A26, AN 78-24284A XP002074740 & JP 53 016 758 A (NITTO ELECTRIC IND CO)

**Beschreibung**

Die Erfindung betrifft Zusammensetzungen bzw. Compounds zur Herstellung von Brandsicherheitskabeln mit Isolations- und/oder Funktionserhalt. Die Erfindung betrifft ferner Brandsicherheitskabel mit Isolations- und/oder Funktionserhalt, die unter Verwendung solcher Zusammensetzungen bzw. Compounds hergestellt sind.

Brandsicherheitskabel sind elektrische Kabel, die auf Grund ihrer Konstitution auch im Brandfall unter anderem über einen begrenzten Zeitraum funktionsfähig bleiben und eine Brandfortleitung in Gebäuden über das Kabel verhindern sollen. Der Erhalt der Funktionsfähigkeit besonders relevanter Stromkreise ist von höchstem Interesse, um ausreichende Rettungs- und Bekämpfungsmaßnahmen sowie die Schadensbegrenzung an Personen und Sachwerten zu gewährleisten und den Löschmannschaften einen größtmöglichen Erfolg bei der Brandbekämpfung zu ermöglichen. Darüber hinaus müssen Brandsicherheitskabel derart ausgestaltet sein, daß eine geringe Rauchentwicklung, eine möglichst geringe Brandlast ebenso wie eine geringe Belastung mit toxischen Gasen gewährleistet ist.

Die Kriterien, denen Brandsicherheitskabel genügen müssen, sind in vielen Ländern gesetzlich geregelt. So werden Kabel mit angegebenem Isolationserhalt beispielsweise gemäß dem internationalen Standard IEC 331 oder gemäß VDE 0472 Teil 814 unter Flammeinwirkung mit einer Prüftemperatur von 750°C über einen Zeitraum von 180 Minuten auf Isolationsversagen geprüft. Diese Prüfung erreicht allerdings die Ansprüche der Realität nur in sehr eingeschränkter Weise, da die Temperatur nur ein Kriterium unter vielen in einem wirklichen Brandfall darstellt. Vielmehr muß ein Zusammenwirken sämtlicher Faktoren eines Brandereignisses betrachtet werden, was auch mechanische Beanspruchung und damit verbundene zusätzliche Anforderungen an das Kabel mit einschließt.

Dementsprechend erfordern die deutschen Vorschriften nach DIN 4102 Teil 12 eine weitaus härtere Prüfung. Diese Methode beschränkt sich nicht nur auf den "Labormaßstab", sondern verlangt die Prüfung eines kompletten Kabelsystems unter annähernd realistischen Bedingungen in einem Prüfstand von mindestens 3 m Länge. Auf diese Weise werden auch andere Einflußfaktoren, wie beispielsweise auf das Kabel wirkende mechanische Kräfte berücksichtigt. Diese können beispielsweise durch Verformungen oder teilweises Versagen des Tragesystems bzw. durch die installationstechnisch bedingte Verlegung der Kabel in Bögen und die damit verbundenen Fixierungen auftreten. Ferner werden auch die Umgebungsbedingungen in die Prüfung mit einbezogen. Außerdem ändert sich die Zusammensetzung der Ofenatmosphäre bedingt durch das Verbrennen einzelner Kabelanteile und anderer im Ofen befindlicher Komponenten, beispielsweise von Zinkbeschichtungen der Tragevorrichtung. Bei der Prüfung nach DIN 4102 Teil 12 wird das Kabel gemäß einer sogenannten Einheitstemperaturzeitkurve (ETK; DIN 4102 Teil 2) über einen Zeitraum von 90 Minuten bei Temperaturen bis 1000°C auf die erforderliche Sicherheit hinsichtlich eines etwaigen Kurzschlusses oder einer Unterbrechung des Stromflusses (Leiterunterbruch) getestet. Ein Funktionserhalt über eine Dauer von wenigstens 90 Minuten bei einer Exposition des Kabels im Ofen bis zu einer Temperatur von 1000°C stellt die höchste Funktionserhaltklasse (E 90) dar. Ein Funktionserhalt dieser Kategorie wird für Kabel beispielsweise in Wasserdruckerhöhungsanlagen zur Löschwasserversorgung, in Lüftungsanlagen in Sicherheitstreppenräumen, innenliegenden Treppenräumen, Fahrschächten und Triebwerksräumen von Feuerwehraufzügen, in Rauch- und Wärmeabzugsanlagen und in Feuerwehraufzügen gefordert.

Die Verwendung von flammwidrigen Polymercompounds mit Metallhydroxiden, insbesondere Aluminiumhydroxid, als Füllstoffe ist bei Brandschutzkabeln allgemein bekannt. Dabei wird eine möglichst hohe Füllstoffkonzentration angestrebt, um eine maximale Flammschutzwirkung zu erzielen. Zu diesem Zweck geeignete Polymere stellen beispielsweise Polyolefine, Ethylencopolymere, siliziumorganische Polymere oder Mischungen solcher dar. Im Brandfall sollen diese gefüllten Polymerzusammensetzungen zum einen die Brandausbreitung entlang des Kabels verhindern und zum anderen eine Schutzfunktion der isolierten Adern übernehmen. Flammwidrige Zusammensetzungen, wie sie die DE 44 37 596 bzw. EP 0 708 455 A1 beschreiben, auf der Basis siliziumorganischer Polymere mit keramisierbaren Füllstoffen, denen ein Benetzungsmittel für den Füllstoff, beispielsweise Metallseifen wie Aluminiumseifen, zugefügt wird, zeigen die bisher größte Flammschutzwirkung (Funktionserhaltklasse E 90) bei akzeptablem Verarbeitungs- und Kostenaufwand. Das speziell zugefügte Benetzungsmittel hat dabei die Aufgabe, zum einen einen maximalen Gehalt an keramisierendem Füllstoff bei weiterhin einstellbarer Viskosität zu garantieren und zum anderen einen speziellen Ankopplungseffekt zwischen keramisierendem Füllstoff und der Polymermatrix zu gewährleisten.

Die JP-A-05-254912 offenbart eine keramisierbare flammwidrige Zusammensetzung zur Herstellung von Brandsicherheitskabeln, die ein siliziumorganisches Polymer, einen keramisierenden Füllstoff und eine mineralische Komponente umfaßt. Die mineralische Komponente in Form eines Glaspulvers hat einen Erweichungspunkt $T_g$ zwischen 600°C und 1000°C. Mit der bei Gläsern geltenden empirischen Formel von $T_g/T_s$ = 2/3 ergibt dies eine $T_s$ von mindestens 900°C.

Aus der WO-A-86/03329 ist eine flammwidrige Kabelumhüllung aus organischen und anorganischen Komponenten einschließlich Glasfaserbändern bekannt, wobei oberhalb von 950°C durch die Zersetzung der organischen Komponenten und das Schmelzen der anorganischen Komponenten ein glasartiger Schaumstoff gebildet wird.

Die JP-A-53-016758 offenbart eine flammwidrige Zusammensetzung aus einem siliziumorganischen Polymer, einem Glaspulver und einem Glimmerpulver, ohne Angaben über ein Schmelzen des Glaspulvers zu machen.

Weitere flammhemmende thermoplastische Zusammensetzungen mit hoher Füllstoffmenge werden in der EP-A-0 054 424, der EP-A-0 082 407 und der WO 93/2056 beschrieben, die beispielsweise auf der Verwendung von Ethylenvinylacetat und Aluminiumhydroxid basieren und bei der Herstellung feuerbeständiger Kabel u.a. für die petrochemische Industrie eingesetzt wer-den. Ein Nachteil solcher gefüllten Polymere besteht jedoch im allgemeinen in einer begrenzt andauernden Schutzwirkung, die besonders bei hohen Temperaturen schnell nachläßt und binnen weniger Minuten zu einer Zerstörung sämtlich vorhandener polymerer Strukturen inklusive der Aderisolationen führt. Letztgenannte Materialien erlauben daher keinen Einsatz in Bereichen, in denen bedingt durch besondere Anforderungen ein hoher Funktionserhalt, beispielsweise der Funktionserhaltungsklasse E 90, benötigt wird, so daß sich ihre Verwendung auf Gebiete weniger kritischer Anforderungen beschränkt.

Um im Brandfall einen Isolations- und/oder Funktionserhalt der elektrischen Kabel zu gewährleisten, kommen hochtemperaturfeste Materialien zum Einsatz. In diesem Zusammenhang sind Isolierschichten auf der Basis von Silikatfasern bzw. Silikonkautschuk bekannt. Hierbei wird die elektrische Isolatoreigenschaft und Hitzebeständigkeit von Siliziumdioxid ($SiO_2$) ausgenutzt, welches bei der Verbrennung (Pyrolyse) der siliziumorganischen Verbindungen entsteht. So beschreibt das Deutsche Gebrauchsmuster G 81 09 304 elektrische Kabel, deren von einem Mantel umschlossene Adern eine zweischichtige Isolierung aus einer äußeren Isolierschicht eines thermoplastischen oder elastomeren Isoliermaterials, wie beispielsweise Ethylenvinylacetat, und einer inneren Isolierschicht aus extrudiertem Silicongummi aufweisen.

Ferner beschreibt das Deutsche Gebrauchsmuster G 92 16 599 elektrische Kabel, deren Leiter von einem Silikongummi und einem nicht vernetzten Ethylenvinylacetat als Adernumhüllung umgeben sind; um diese Adernumhüllung ist als Flammbarriere eine Bandierung mit aufgebrachtem Keramikmaterial gewickelt.

Aber auch solche Isolationen erlauben keinen Funktionserhalt, der besonders hohen Anforderungen genügt.

Die DE-A- 37 13 267 beschreibt flammwidrige Massen auf der Basis von Silikonkautschuk in gießfähiger oder zu einem Elastomer erhärtbarer Form, die feinverteiltes Titandioxid und ggf. Siliziumdioxid, katalytische Mengen von feinverteiltem Platin und eine Löschsubstanz wie Natriumbicarbonat enthalten. Letzteres setzt in dem Elastomer Kohlendioxid als feuerhemmendes Löschgas frei, das das Elastomer unterhalb seiner Zersetzungtemperatur zu einem mechanisch stabilen, mikroporösem Material aufschäumt. Die mechanische Festigkeit der Schaumstruktur wird durch die Anwesenheit des Titandioxids bedingt, das in einer Menge von ungefähr fünf Gewichtsteilen pro 100 Gewichtsteilen Silikonkautschuks vorliegt. Aus solchen Materialien hergestellte elektrisch isolierende Bauteile weisen im Brandfall eine längere Funktionsfähigkeit und eine verbesserte Kriechstromfestigkeit, genügen jedolch noch immer nicht gehobenen Anforderungen.

Aus der DE-A-37 22 755 sind zu Siloxanelastomeren härtbare Massen bekannt, die ein hochviskoses Polydiorganosiloxan, einen verstärkenden Siliziumdioxidfüllstoff, ein Copolymer aus $R_3SiO_{0.5}$- und $SiO_2$-Einheiten, wobei der Rest R beispielsweise für eine Methylgruppe steht, sowie Glimmer und ein Organoperoxid enthalten. Der Anteil des elastomerstabilisierenden Siliziumdioxidfüllstoffs beträgt zwischen 5 und 75 Gewichtsteilen auf 100 Gewichtsteile Polydiorganosiloxan. Der Glimmeranteil, der eine Verbesserung der Integrität der Isolierung unter Feuerbedingungen bewirken soll, liegt zwischen 85 und 100 Gewichtsteilen auf 100 Gewichtsteile Polydiorganosiloxan. Zu hohe Mengen an Glimmer, beispielsweise über 220 Gewichtsteilen, führen hingegen zu Schwierigkeiten bei der Verarbeitung und zu schlechteren mechanischen Eigenschaften des gehärteten Elastomers.

Die DE-A-30 08 084 beschreibt Zusammensetzungen, die bei bis zu 700 Gewichtsteilen Polyorganosiloxan bis zu 300 Gewichtsteile eines keramikbildenden Füllstoffs aufweisen. Um nach der Vernetzung der Mischung eine ausreichende Elastizität und Biegsamkeit des Produkts zu gewährleisten, sollte der Füllstoffgehalt 100 Gewichtsteile jedoch nicht überschreiten.

Die US-A-4,288,360 und die US-A-3,862,082 beinhalten zu Silikonkautschuken härtbare, flammwidrige Massen auf der Basis von Polyorganosiloxanen mit anorganischen, beispielsweise oxidischen Füllstoffen wie Titandioxid, die als Verstärkungsmaterialien fungieren. Die maximal erreichbaren Füllstoffkonzentrationen ermöglichen einerseits noch keinen ausreichenden Funktionserhalt unter extremen Bedingungen, andererseits weisen die resultierenden gefüllten Polyorganosiloxanmassen für eine Handhabung unter Normalbedingungen noch unzufriedenstellende mechanische Eigenschaften auf.

Den größten Anwendungsbereich, insbesondere bei hohen brandtechnischen Anforderungen, finden unmittelbar auf dem Leitungsdraht aufgebrachte Glimmerbandierungen. Dabei werden für den Funktionserhalt gemäß E 90 bisher ausschließlich Kabel dieser Art eingesetzt, wobei die Glimmerbandierung meist in Verbindung mit den oben beschriebenen hochgefüllten Polymeren oder mit anderen zusätzlichen keramischen Werkstoffen Verwendung finden. So beschreibt die DE-A-41 32 390 elektrische Kabel mit Funktionserhalt, in denen zur Isolierung der einzelnen Leiter eine Isolierschicht vorgesehen ist, die aus zwei Lagen eines mit Glimmer beschichteten Glasgewebebandes und einer dazwischen angeordneten dünnen Schicht eines hochtemperaturfesten Keramikklebers besteht. Die US-A-5 227 586 beinhaltet ebenfalls bis zu Temperaturen von 1000°C beständige flammwidrige elektrische Kabel, in denen sich die von einem Isoliermaterial wie Silikonkautschuk umgebenen elektrischen Leiter in einer Hülle aus zwei übereinander aufgebrachten Flammbarriereschichten, beispielsweise Glimmerschichten befinden. Ferner beschreibt die CH-A-683 213 elektrische Kabel mit Isolations- und/oder Funktionserhalt, in denen die einzelnen Adern mit einer im wesentlichen aus Glasfaserband und Glimmerplättchen bestehenden ersten Bandagierung umhüllt sind. Diese Bandage ist mit einer Isolierung aus halogenfreiem Polymer versehen, die schließlich von einer zweiten Bandagierung aus Glasgarn umgeben ist.

Ein großer Nachteil an der Verwendung von Glimmerbandierungen in Brandschutzkabeln liegt in den damit verbundenen hohen Kosten begründet. Desweiteren sind auch Glimmerbandierungen auf elektrischen Leitern nur begrenzt temperaturbeständig und gegenüber mechanischen Beanspruchungen nur bedingt stabil. Mit steigenden Anforderungen müssen daher speziell geeignete Glimmertypen und zunehmende Schichtdicken eingesetzt werden. Ein weiterer Nachteil besteht in der Verwendung von zur Fixierung dienenden, meist nicht hochtemperaturfesten Harzen und Bindemitteln zwischen Glimmerpartikeln und Glasgewebeträgern. Viele andere keramische Werkstoffe weisen zudem häufig keine über das Temperaturband geforderte ausreichende elektrische Durchschlagsfestigkeit auf und bilden aufgrund hoher Kosten ebenfalls keine preiswerte Alternative. Aus genannten Gründen besteht ein großer Bedarf an weiteren Materialien bzw. Materialzusammensetzungen, die die Herstellung von hohen Sicherheitsanforderungen genügenden Brandsicherheitskabeln zu einem akzeptablen Preis erlauben. Zudem erschweren die diversen Bandierungen im Kabel die Handhabung bei der Kabelmontage, namentlich beim Abmanteln und Abisolieren der Kabelenden. Der Aufwand für die Kabelmontage steigt mit zunehmender Zahl an Bebänderungen.

Aufgabe der vorliegenden Erfindung ist es, ein kostengünstiges, im Vergleich zu obengenannten Materialien in geringerer Schichtstärke und damit bei verbesserter Effizienz verwendbares und problemlos zu verarbeitendes Material zur Verfügung zu stellen, das sich insbesondere zur Herstellung von elektrischen Kabeln mit hohem Isolations- und/oder Funktionserhalt eignet, aber auch Anwendungen im vorbeugenden Brandschutz allgemein, wie für Brandschutzverkleidungen, hervorragend ermöglicht. Weiter soll das Material auch bei üblichen Gebrauchstemperaturen ausgezeichnete mechanische Eigenschaften aufweisen.

Diese Aufgabe wurde durch eine Zusammensetzung nach Anspruch 1 gelöst, einer keramisierbaren flammwidrigen Zusammensetzung, enthaltend mindestens ein siliziumorganisches Polymer, mindestens einen keramisierbaren Füllstoff und mindestens eine schmelzende und wiedererstarrende oder schmelzende und keramisierende oder schmelzende und kristallisierende, mineralische Komponente, die bei einer im Vergleich zur Sintertemperatur des keramisierbare Füllstoffs niedrigeren Temperatur schmilzt und weiter wie in Anspruch 1 definiert ist, und gegebenenfalls weitere Hilfs- und Zusatzstoffe.

Gegenstand der Erfindung sind ferner elektrische Adern oder Kabel mit Isolations- und/oder Funktionserhalt, aber auch Anwendungen im vorbeugenden Brandschutz allgemein, wie Brandschutzverkleidungen, Verteilerdosen oder Verbindungsmuffen, die wenigstens einen Bestandteil auf der Basis dieser keramisierbaren Zusammensetzung enthalten.

Der Erfindung liegt die Erkenntnis zugrunde, daß in bekannten Zusammensetzungen im Brandfall oft ein kritischer Temperaturbereich zwischen der destabilisierenden Zersetzung der siliziumorganischen Polymerstruktur und stabilisierenden Sinterungsvorgängen der Füllstoffkomponenten beobachtet wurde, währenddessen kein optimaler Schutz gegeben ist. Durch die erfindungsgemäße Zusammensetzung wird dieser Temperaturbereich minimiert.

Die hohe mechanische Festigkeit der flammwidrigen Zusammensetzungen, welche für einen ausreichend hohen Isolations- und/oder Funktionserhalt im Brandfall verantwortlich ist, wird nach bewährtem Prinzip eines mit Benetzungsmittel versehenen Compounds erreicht. Das beim Verbrennen des siliziumorganischen Polymers bzw. im Compound frei vorliegende Siliziumdioxid ($SiO_2$) reagiert mit dem/den keramisierenden Füllstoff/en in einer Sinterungsreaktion, die elektronenmikroskopischen Untersuchungen zufolge in Form einer Randschichtensinterung der normalerweise pulverförmig vorliegenden Substanzen abläuft. Der oben beschriebene kritische Temperaturbereich zwischen der destabilisierenden Zersetzung der siliziumorganischen Polymerstruktur und dem Einsetzen erster stabilisierender Sinter- und Keramisierungsvorgänge, währenddessen keine maximale Stabilität der Zusammensetzung erreicht wird, kann erfindungsgemäß durch den neuartigen Zusatz mindestens einer schmelzenden und wiedererstarrenden bzw. keramisierenden oder kristallisierenden, mineralischen Komponente mit einem im Vergleich zur Sintertemperatur des keramisierenden Füllstoffs niedrigeren Schmelzpunkt, wie in Anspruch 1 definiert deutlich reduziert werden. Das Funktionsprinzip beruht auf einer Verschiebung der Reaktions- und Verfestigungsmechanismen zu niedrigeren Temperaturen, die vom Erweichungspunkt der Glas- oder Tonkomponente abhängt. Damit ist eine Steigerung der Plastizität und Verbesserung des Rißbildungs- bzw. Rißfortschrittsverhaltens verbunden. Insbesondere können auch durch eine geeignete Wahl von zwei oder mehreren "Gläsern" und/oder "Tonen" die flammwidrigen Eigenschaften in dem oben beschriebenen kritischen Temperaturbereichen weiter verbessert werden.

Unter einem "Glas" versteht man im Sinne der vorliegenden Erfindung eine ohne Kristallisation erstarrte Schmelze, deren Atome zwar eine Nah- aber keine gerichtete Fernordnung aufweisen. Zu ihrer Bildung kommt es in der Regel dann, wenn die Geschwindigkeit der "Kristallkeimbildung" in einer Schmelze unterhalb ihres Schmelzpunktes, verglichen mit der Abkühlgeschwindigkeit des geschmolzenen Stoffes, klein ist.

In einer bevorzugten Ausführungsform enthält die erfindungsgemäße Zusammensetzung ein Benetzungsmittel für den keramisierenden Füllstoff (Anspruch 2). Die flammwidrige Zusammensetzung weist dabei mindestens

EP 0 978 128 B1

ein Benetzungsmittel für die keramisierenden Füllstoffe auf, wobei insbesondere Tenside, natürliche oder synthetische amphiphile chemische Substanzen, Verwendung finden.

In einer weiteren bevorzugten Ausführungsform wird (werden) die Komponente(n) (z.B. das/die Glas/Gläser) als verteilte, körnige Partikel in die Zusammensetzung eingearbeitet (Anspruch 3).

Die Eigenschaft, aus dem Schmelzfluß glasig zu erstarren, zeigen z.B. Gemische saurer Oxide (Siliciumdioxid, Bortrioxid, Aluminiumtrioxid u.ä.), die ein dreidimensionales Netzwerk ausbilden, mit basischen Oxiden (Natrium-, Kalium-, Magnesium-, Blei-, Calcium-, Zinkoxid o.ä.). Der Hauptbestandteil solcher Gläser ist Siliziumdioxid. Durch die Anlagerung der basischen Metalloxide bzw. der entsprechenden ein- oder zweiwertigen Kationen werden die Siloxanbrücken teilweise gespalten. Je mehr Trennstellen dieser Art vorhanden sind, desto niedriger liegt der Erweichungs- oder Schmelzpunkt des Glases. Silizium kann aber auch durch andere netzwerkbildende Ionen tw. ersetzt werden (z. B. dreiwertiges Bor oder Aluminium oder fünfwertiger Phosphor). Es handelt sich dann um die sogenannten "Silikatgläser".

Erfindungsgemäß geeignete Gläser sind Glasfritten und kristallisierende Gläser wie sie allgemein im Handel erhältlich sind. Wahlweise werden auch sogenannte kristallisierende Gläser eingesetzt, die sich durch ein erneutes Verfestigen aus der Schmelzphase bei hohen Temperaturen auszeichnen.

Feuerhemmende Glasfritte, bspw. in Pulverform, wird in Mischung mit alkaliarmen Gläsern als Glaskomponente eingesetzt. Insbesondere bevorzugt sind dabei solche Glasfritten, die fortschreitend über ein Temperaturintervall von 350 bis 900 °C schmelzen, so daß das Grundmaterial systematisch eingeschlossen und damit gegen Feuer geschützt wird. Solche insbesondere bevorzugten Glasfritten haben typischerweise einen Brechungsindex zwischen 1,4 und 1,7, insbesondere zwischen 1,5 und 1,6. Ihre mittlere Teilchengröße beträgt zwischen 2 und 70 μm, insbesondere zwischen 2 und 50 μm. Sie weisen typischerweise eine spezifische Oberfläche von 0,5 bis 2 mm$^2$/g auf. Bei hohen Temperaturen (ca. 1000 °C) bilden die Glasfritten dann typischerweise eine geschlossene, kristallin-glasige Barriere gegen Rauch, giftige Dämpfe und Flammen. Temperaturen von bis zu 1100 °C können derart ertragen werden, ohne daß das erfindungsgemäße Material selbst Rauch oder giftige Dämpfe entwickelt.

In einer Ausführungsform der vorliegenden Erfindung wird als niedrigschmelzende Glaskomponente eine Mischung aus Glasfritten und alkaliarmen Gläsern verwendet, die einen Schmelzpunkt von weniger als 750 °C aufweist . Typischerweise weisen Mischungen aus bleifreien und alkaliarmen Gläsern mit Glasfritte eine höhere Schmelztemperatur auf als die Glasfritte allein, die häufig bereits bei Temperaturen unterhalb von 500 °C schmilzt. Gleichzeitig kann der hohe Alkaligehalt, gegebenfalls auch der hohe Bleioxidgehalt, der Glasfritte, der für die elektrischen Isolatoreigeschaften der bspw. in der Isolationsschicht von Brandschutzkabeln eingesetzten, erfindungsgemäßen Zusammensetzung nachteilig ist, durch die Zumischung des alkaliärmeren Glases verringert werden. Die eingesetzte Glasfritte liegt dabei insbesondere als Frittepulver vor. Das Frittepulver für die Mischung hat eine Dichte zwischen 2,5 und 3,0 g/cm$^3$ und einen durchschnittlichen Korndurchmesser von ca. 50 μm.

Kristallisierende Glaslote besitzen eine erhöhte Kristallisationsneigung. Während des Lötprozesses gehen sie in einen keramikartigen, polykristallinen Zustand über. Dadurch wird eine stärkere thermische Wiederbelastung der Lötverbindung möglich. Erst bei starker Temperaturerhöhung über die Löttemperatur hinaus setzt ein Wiederaufschmelzen der Kristalle ein.

Die beiden Bezeichnungen Glaslote und Passivierungsglas beziehen sich vornehmlich auf den unterschiedlichen Einsatz der jeweiligen Glassorten. Es handelt sich also um anwendungsorientierte Bezeichnungen. Glaslot wird für das Fügen von Glas, Keramik oder Metall, Passivierungsglas dagegen für den Oberflächenschutz von Halbleiterbauelementen eingesetzt. Bei einem Vergleich der für diese beiden Anwendungsgebiete jeweils genutzten Glassorten schmelzen die Glaslote in der Regel bei niedrigeren Temperaturen als die Passivierungsgläser.

Die aufgeschmolzenen Glasschichten von Passivierungsgläsern bieten eine sicheren Schutz vor mechanischen und/oder chemischen Einwirkungen. Typischerweise handelt es sich bei den Passivierungsgläsern um Zinkborat- bzw. Zink-Borosilikatgläser oder Bleisilikat- bzw. Blei-Borosilikatgläser mit einem niedrigen Anteil an Alkalimetalloxidkonzentrationen. In einer Ausführungsform der vorliegenden Erfindung wird eine Zusammensetzung beansprucht, die als niedrigschmelzende Glasurkomponente mindestens ein kristallisierendes Passivierungsglas mit einem Alkalimetalloxidanteil von weniger als 600 ppm und eine Schmelztemperatur von nicht höher als 710°C aufweist. Insbesondere bevorzugt sind dabei bleioxidarme Zinkborat- bzw. Zink-Borosilikatgläser. Sie besitzen Glasübergangstemperaturen zwischen 510 und 570 °C, Erweichungstemperaturen zwischen 590 und 660 °C und Schmelztemperaturen zwischen 650 und 710 °C. Ganz besonders bevorzugt sind kristallisierende Zinkboratgläser mit einem niedrigen Bleioxidanteil. Typischerweise liegt dieser Bleioxidanteil unter 5 Gew.-%, wobei das Bleioxid im wesentlichen fest in die Glasstruktur eingebunden ist. Als Hauptbestandteile der Zinkboratgläser werden mehr als 20 Gew.-% ZnO und B$_2$O$_3$ und mehr als 5 Gew.-% SiO$_2$ angegeben. Die Passivierungsgläser zeichnen sich durch einen äußerst geringen Anteil an effektiven Alkalimetalloxidkonzentrationen aus. Bevorzugt liegt dieser Anteil bei weniger als 600 ppm, ganz besonders bevorzugt sind weniger als 200 ppm Na$_2$O, weniger als 200 ppm K$_2$O und weniger als 50 ppm Li$_2$O. Typischerweise liegt das Passivierungsglas in einer Körnung von 99 % < 40 μm und ca. 50 % < 8 μm vor. Die Dichte des Passivierungsglases beträgt bevorzugt zwischen 3,4 und 3,9 g/cm$^3$.

5

Mit Hilfe von Glasuren können keramische Oberflächen mit den aus den verschiedensten Gebrauchs- und Nutzanwendungen bekannten glasigen Überzügen versehen werden. Je nach Art des Flußmittels können Schmelzphasen PbO- und/oder $B_2O_3$ haltiger Glasuren ab 500 °C auftreten. "Glasur" wird anwendungsbezogen definiert. Durch eine Glasur können keramische Partikel in der Schmelzphase gelöst und miteinander verbunden werden. Diesem Effekt liegt die Tatsache zugrunde, daß Glasuren grundsätzlich flußmittelreicher als der "Scherben" sind, weshalb sie auf die Keramikoberfläche lösend wirken. Hierdurch kann eine Füllstoffkorneinbindung durch das Lösen der keramischen Partikeloberfläche in der Schmelzphase erreicht werden.

Die in den Compounds eingearbeiteten Partikel, insbesondere Partikel der vorstehend bezeichneten Materialien, schmelzen unter Wärmeeinwirkung, beispielsweise bedingt durch einen Brandfall, bereits bei niedrigen Temperaturen (je nach Typ bereits bei 400 °C). Die geschmolzene Phase diffundiert in die angrenzenden Bereiche der hauptsächlich aus Metalloxid-Füllstoffen bestehenden Kornstruktur. Die Kornstrukturen begünstigen wiederum diesen Diffusionsvorgang durch die Ausbildung einer Kapillarwirkung. Somit entstehen im Brandfall schon frühzeitig bei tiefen Temperaturen große verglaste Bereiche in den Compounds, welche im Volumen wesentlich größer sind als die vormaligen Partikel selbst. Zum Teil können - bedingt durch eine vollständige Schmelzediffusion - am ursprünglichen Ort der Partikel sogar Hohlräume auftreten, welche allerdings auf Grund ihres vollständigen Einschlusses in die Glasphase keine negative Beeinträchtigung darstellen. Gleichzeitig ermöglichen die flüssigen Glasphasen zwischen den Kornstrukturen der Füllstoffe und den bereits in unterschiedlichem Umfang vorliegenden pulverförmigen Abbauprodukten des siliziumorganischen Polymers eine Art plastisches Verhalten. Dadurch werden Spannungen aus dem Beanspruchungsmechanismus teilweise durch Verformung oder Fließen effektiv abgefangen. Zusätzlich kann der durch die Glasphase ausgeübte verfestigende Einfluß in Abhängigkeit des Glas-/Glasur- und Metalloxid-Typs durch ein Lösen der Kornoberfläche der Metalloxide in der Glas (ur) komponente unterstützt werden. Die Viskosität der Schmelze wird dadurch erhöht, was insgesamt zu einer wesentlich geringeren Empfindlichkeit des Systems, u.a. gegen das Abtropfen und durch niedrigviskosen Schmelzfluß frei bewegliche Ladungsträger, beiträgt.

Um die erforderlichen elektrischen Isolatoreigenschaften der flammwidrigen Zusammensetzungen zu gewährleisten, sollte die erfindungsgemäße Zusammensetzung frei von bzw. arm an elektrisch leitenden Komponenten, wie z.B. Ionen, sein. Insbesondere im geschmolzenen Zustand stellt eine minimale Konzentration an derartigen Komponenten ein wichtiges Charakteristikum dar. Es werden daher in der erfindungsgemäßen Zusammensetzung solche Gläser/Glasuren bevorzugt, deren Anteil an elektrisch leitenden Einschlußstoffen, d.h. insbesondere an Ionen, möglichst gering ist. Dabei ist auch stets der Anwendungszweck zu berücksichtigen. Eine Rezeptur für die Anwendung in einem Brandmeldekabel, das bei einer Spannung von 110 V geprüft wird, kann einen höheren Anteil an leitfähigen Bestandteilen aufweisen als ein Niederspannungskabel, das bei 380 V geprüft wird.

In einer weiteren bevorzugten Ausführungsform liegen mindestens 1,0 Gewichtsteile des (der) Glases (Gläser) bzw. der Glasur(en) pro 100 Gewichtsteile des/der siliziumorganischen Polymers/e vor. Insbesondere bevorzugt sind Zusammensetzungen mit 1 bis 70 Gewichtsteilen des (der) Glases (Gläser) bzw. der Glasur(en) (Anspruch 4). Ganz besonders bevorzugt sind solche Zusammensetzungen, deren Anteil an Glas- bzw. Glasurkomponente(n) zwischen 10 und 60 Gewichtsteile pro 100 Gewichtsteile des/der siliziumorganischen Polymers/e beträgt. Insbesondere bevorzugt sind Zusammensetzungen mit 20 bis 50 Gewichtsteilen der Glas- bzw. Glasurkomponente(n) pro 100 Gewichtsteile des/der siliziumorganischen Polymers/e.

Der Anteil des (der) verwendeten Glases (Gläser) bzw. Glasur(en) in den flammwidrigen Compounds kann dabei wesentlich von deren Art und der Konzentration an keramisierendem Füllstoff abhängen, wobei dabei stets auf die jeweils gewünschte Eigenschaft (z.B. die Festigkeit als mechanische Eigenschaft), die es für die jeweilige Anwendung zu optimieren gilt, abgestellt wird. Eine keineswegs abschließende Übersicht über Eigenschaften von Zusammensetzungen mit bestimmten Füllstoffanteilen, bestimmten Anteilen einer Glas- bzw. Glasurkomponente (wobei stets auch eine Kombination zweier oder mehrerer Glas- oder Glasurkomponenten möglich ist), auch in Abhängigkeit von der Art der Glas- oder Glasurkomponente, liefern die Tabellen 1 und 2. Zusammenfassend ist festzuhalten, daß der jeweilige Anwendungszweck die Wahl der Glas- oder Glasurkomponente bzw. deren Konzentration in der Zusammensetzung bestimmt.

Elektronenmikroskopische Aufnahmen zeigen zudem einen positiven Einfluß der Glaseinlagerungen auf die, durch erhöhte mechanische Beanspruchung bedingte Rißbildung innerhalb der Compounds. So ist die Neigung zur Rißausbildung vor allem in Kombination mit solchen Materialien wesentlich reduziert, welche einen deutlich höheren thermischen Ausdehnungskoeffizienten aufweisen, beispielsweise Metalle wie Kupferdraht. Beim Durchlaufen eines dennoch auftretenden Risses durch ein glasiertes Gebiet wird dem Riß Energie entzogen. Diese Dissipation der Rißenergie führt zu Rißablenkung, Rißverzweigungen oder zu einem Stoppen des Rißfortschritts. In einigen Fällen konnten aufeinander zulaufende Risse durch eine Glaseinlagerung regelrecht abgeblockt und somit in ihrer Verbindung und großflächigen Ausdehnung regelrecht gehindert werden. So wird ein vollständiges Auftrennen der keramischen Schicht verhindert bzw. verzögert. Damit einher geht auch eine in den erfindungsgemäßen Compounds gesteigerte Bruchfestigkeit, gesteigerte Grenzflächenanbindung an Kupfer(-draht) und bessere Anbindung durch gegenseitige Infiltration im Grenzflächenbereich verbunden mit einem geringeren Materialschwund. Zudem weist die erfindungsgemäße Zusammensetzung gegenüber Compounds ohne zugesetzte/s niedrigschmelzende/s Glas (Gläser) oder Glasur (en) im normalen Gebrauch, d.h bei Raum- und Gebrauchstemperatur (z.B. bis 90 °C), keine ungünstigen Eigenschaften hinsichtlich der Plastizität, der Vernetzung (Vulkanisation), einer Dehnung nach Vernetzung und der Rißanfälligkeit auf.

Zusammen mit den Gläsern können aber auch Tone als niedrigschmelzende und keramisierende Komponente in die Zusammensetzung eingearbeitet sein (z.B. Kaolinit, Illit). Bspw. wird während der Thermolyse von Kaolinit zunächst hydroxidisch gebundenes Wasser abgegeben, danach entsteht unter Volumenverminderung und Porenbildung Siliziumdioxid, Korund und amorphes schuppenförmiges Mullit. Um 950 °C bildet sich durch Verflüssigung des Feldspats eine Schmelzphase, in der sich amorphes Siliziumdioxid und amorpher Mullit lösen. Darüber hinaus bilden Kaliumoxid (z.B. aus Feldspat oder Illit) und Siliziumdioxid ein Glas, das nach Abkühlen des keramischen Erzeugnisses kleinere Keramikteilchen verkitten kann.

Als siliziumorganische Polymere werden zweckmäßig die auf diesem Gebiet bekannten, im Handel erhältlichen, bevorzugt elastischen oder elastifizierbaren, Polymere eingesetzt, wie Polyorganosilazane, Polyorganosiloxane (Silikone), beispielsweise Silikonharze, Silikongummis, und Silikonkautschuke, wie HTV-Silikonkautschuk. Dabei werden Polyorganosiloxane (Silikone) bevorzugt eingesetzt. Die siliziumorganischen Polymere können allein oder in Mischungen vorliegen und in ihrem freien Gehalt an Siliziumdioxid ($SiO_2$) variieren, stellen aber in bevorzugter Weise die Matrix für die keramisierenden Füllstoffe dar. Bevorzugt werden siliziumorganische Polymere mit einem mittleren Siliziumdioxidgehalt verwendet, wie er in HTV-Silikonkautschuken mit einer Shore A-Härte von 40-80 vorliegt. Besonders geeignet sind Polyorganosiloxane (Silikone) mit niedrigen oder mittleren Viskositäten, da diese einen hohen Gehalt an keramisierenden, oder gegebenenfalls auch nichtkeramisierenden Füllstoffen zulassen. Aber auch hochviskose Polymere mit einem geringeren maximalen Gehalt an keramisierenden Füllstoffen finden Anwendung, beispielsweise in Bestandteilen von Brandschutzkabeln mit weniger strengen Sicherheitsanforderungen. Die Gruppe der allgemein geeigneten siliziumorganischen Polymere umfaßt sowohl Moleküle mit zur Vernetzung geeigneten funktionellen Gruppen, wie beispielsweise Hydroxyl- oder Vinylfunktionen, als auch solche ohne vernetzbare Funktionen; die erfindungsgemäße Zusammensetzung kann sowohl im Ausgangszustand als auch im fertig verarbeiteten Endprodukt in unvernetzter, vernetzter oder teilvernetzter Form vorliegen. Dabei hängt die Form der Zusammensetzung auch von der gewünschten Füllstoffkonzentration insofern ab, als sich mit zunehmender Füllstoffkonzentration die Vernetzungsdichte bis hin zu einem quasi thermoplastischen Eigenschaftsbild verringert, während bei niedrigeren Konzentrationen eine wenigstens teilweise Vernetzung vorliegt.

Als keramisierende Füllstoffe sind sämtliche mit Siliziumdioxid keramikbildenden Verbindungen geeignet, beispielsweise Silikate, wie Aluminiumsilikat, Titansilikat und Magnesiumsilikat, Aluminate, wie Natriumaluminat, Nitride, wie Siliciumnitrid, Bornitrid und Aluminiumnitrid, Carbide, wie Wolframcarbid, Titancarbid und Molybdäncarbid.

In einer bevorzugten Ausführungsform werden Oxide, wie Magnesiumoxid, Titandioxid und insbesondere Aluminiumoxid (Anspruch 5) oder Mischoxide bevorzugt, insbesondere Mischoxide von $Al_2O_3$ und $SiO_2$, beispielsweise Mullit (3 $Al_2O_3$ x 2 $SiO_2$), eingesetzt. Der Einsatz der keramisierenden Füllstoffe kann sowohl in Reinform oben genannter Substanzen als auch in deren Mischungen erfolgen, wobei Oxide prinzipiell bevorzugt verwendet werden. Einen besonderen Vorzug erhält der Einsatz von Aluminiumoxid in sämtlichen seiner vorkommenden Modifikationen, beispielsweise $\alpha$-$Al_2O_3$. Ferner fallen unter den Begriff der keramisierenden Füllstoffe auch deren Vorläuferverbindungen, d.h. Substanzen, die beispielsweise unter Hitzeeinwirkung in oben beschriebene Füllstoffe übergehen. So können anstelle des Aluminiumoxids auch die verschiedenen Modifikationen des Aluminiumhydroxids, wie Bayerit, Hydrargillit, Böhmit und Diaspor zum Einsatz kommen, die beim Erhitzen in Aluminiumoxid übergehen. Bevorzugt werden jedoch die keramisierenden Substanzen als solche eingesetzt.

Der keramisierende Füllstoff liegt zweckmäßig in feinpulverisierter Form mit einer spezifischen Oberfläche von ungefähr 0.5-10,0 $m^2$/g, vorzugsweise 1,0-5,0 $m^2$/g, und einer mittleren Korngröße von ungefähr 0,5-4.0 $\mu m$, vorzugsweise 1.5-2.5 $\mu m$, vor. Die Menge des Füllstoffs wird dem Verwendungszweck und den Anforderungen an den Funktionserhalt entsprechend gewählt. Zweckmäßig enthält die Zusammensetzung auf 100 Gewichtsteile des/der siliziumorganischen Polymers/e wenigstens 50 Gewichtsteile (Anspruch 6), insbesondere bevorzugt wenigstens 100 Gewichtsteile und ganz besonders bevorzugt wenigstens 200 bis 300 Gewichtsteile keramisierenden Füllstoff. Die obere Grenze der Füllstoffkonzentration wird durch die praktischen Gegebenheiten bestimmt, so auch durch die Wahl des/der siliziumorganischen Polymers/e, und liegt bei ungefähr 450 bis 500 Gewichtsteilen pro 100 Gewichtsteile siliziumorganischem/n Polymer/en. Geeignete Füllstoffkonzentrationen liegen zweckmäßig im Bereich von 100 bis 500 Gewichtsteilen, bei höheren Anforderungen von 200 bis 500 Gewichtsteilen, und bevorzugt von 250 bis 400 Gewichtsteilen pro 100 Gewichtsteile des/der siliziumorganischen Polymers/e. Allgemein wird ein hoher mineralischer Füllstoffanteil bevorzugt.

Zweckmäßige Benetzungsmittel stellen in einer bevorzugten Ausführungsform Metallseifen dar; insbesondere bevorzugt sind dabei Aluminiumseifen (Anspruch 7). Es handelt sich bei den Metallseifen, wie sie allgemein üblich im Handel, beispielsweise mit Schmelzbereichen von 100°C bis 150°C, erhältlich sind, insbesondere um Salze höherer Fettsäuren. Einen besonders bevorzugten Einsatz erfährt dabei Aluminiumstearat. Die Metallseifen können zudem auch in roher Form mit einem mehr oder minder großen Gehalt an freien Fettsäuren verwendet werden.

Der Anteil des Benetzungsmittels hängt von der Konzentration des keramisierenden Füllstoffs ab und beträgt zweckmäßig wenigstens 0,5 Gewichtsteile pro 100 Gewichtsteilen des/der siliziumorganischen Polymers/e und vorteilhaft wenigstens 3 Gewichtsteile. Zweckmäßige Mengen an Benetzungsmittel liegen im Bereich von 0,5 bis 25, insbesondere von 1 bis 20, beispielsweise von 3 bis 15 Gewichtsteilen pro 100 Gewichtsteile des/der siliziumorganischen Polymers/e.

In einer bevorzugten Ausführungsform weist die flammwidrige Zusammensetzung einen oder mehrere Hilfs- und/oder Zusatzstoffe auf. Insbesondere schließen diese Hilfs- und Zusatzstoffe zusätzliche nichtkeramisierende Füllstoffe und Vernetzungsmittel ein (Anspruch 8). Insbesondere bevorzugt als nichtkeramisierende anorganische Füllstoffe sind dabei Carbonate, insbesondere Calciumcarbonat ($CaCO_3$) oder Magnesiumcarbonat ($MgCO_3$) (Anspruch 9), Mischungen von Calcium- und Magnesiumcarbonat oder deren Mischsalze, wie Mg-Ca-Carbonat-Hydrate, die auch in Verbindung mit herkömmlichen, bereits bekannten Polymercompounds Verwendung finden. Ganz besonders bevorzugt eingesetzt wird dabei Calciumcarbonat. Der Anteil an nichtkeramisierenden Füllstoffen beträgt zweckmäßig bis zu 200 Gewichtsteilen, vorzugsweise bis zu 150 Gewichtsteilen, beispielsweise 10-100 Gewichtsteile Füllstoff pro 100 Gewichtsteile des/der siliziumorganischen Polymers/e. Dabei liegt die praktische obere Grenze für die Gesamtsumme an keramisierenden und nichtkeramisierenden Füllstoffen in der erfindungsgemäßen Zusammensetzung, wie oben beschrieben, bei etwa 450 bis 500 Gewichtsteilen pro 100 Gewichtsteile des/der siliziumorganischen Polymers/e.

Gegebenenfalls kann die erfindungsgemäße zusammensetzung weitere Hilfs- und Zusatzstoffe, insbesondere Verarbeitungshilfen, Weichmacher, Vernetzungskatalysatoren oder Vernetzungsmittel und Pigmente enthalten.

Je nach Art des/der siliziumorganischen Polymers/e kann die Zusammensetzung auch übliche, im Handel erhältliche Vernetzungsmittel enthalten. In einer bevorzugten Ausführungsform werden organische Peroxide (Anspruch 10), wie sie bei der Vernetzung von Silikonen dem Stand der Technik entsprechen, vorzugsweise Benzoylperoxid, 2,4-Dichlorbenzoylperoxid, Dicumylperoxid oder 2,5-Dimethyl-2,5-di[t-butylperoxy]hexan, oder Vernetzungskatalysatoren, beispielsweise Additionskatalysatoren, wie feinverteiltes Platin oder Platinverbindugen, eingesetzt. Die Menge an Vernetzungsmittel (n) in der Zusammensetzung beträgt im Bedarfsfall zweckmäßig bis zu 5 Gewichtsteile, beispielsweise 0,5 bis 5 Gewichtsteile; vorzugsweise 1 bis 3 Gewichtsteile pro 100 Gewichtsteile des/der siliziumorganischen Polymers/e.

Die erfindungsgemäße Zusammensetzung mit mindestens einem siliziumorganischen Polymer, mindestens einem keramisierbaren Füllstoff, mindestens einem Benetzungsmittel für den keramisierenden Füllstoff und mindestens einem/r schmelzenden und wiedererstarrenden oder kristallisierenden bzw. keramisierenden Glas/Glasur oder Ton liegt bevorzugt als sogenannter keramischer Polymercompound, d.h. als verarbeitungsfähige Mischung, vor, kann aber auch eine - beispielsweise unvernetzte - Vorstufe eines solchen Compounds darstellen.

In einer bevorzugten Ausführungsform enthält die erfindungsgemäße Zusammensetzung mineralische Fasern, insbesondere Silikat-, Glas- oder Keramikfasern (Anspruch 11). Diese nicht brennbaren, mineralischen Fasern können entweder als Gewebe zusammen mit dem Compound eine Laminatstruktur bilden oder ungeordnet im Compound vorliegen.

Die erfindungsgemäße Zusammensetzung kann nach den im Stand der Technik auch für andere hochgefüllte Mischungen bekannten Verfahren durch Mischen bzw. Compoundieren, d.h. Einarbeiten des/r Glases/Glasur zusammen mit dem keramisierenden Füllstoff in die übrigen Bestandteile, beispielsweise mit üblichen Knetmaschinen oder auf herkömmlichen Gummiwalzwerken, hergestellt und verarbeitet werden (Anspruch 12). Auch konventionelle Verarbeitungsmethoden, wie Extrusion oder Coextrusion, sind unter Berücksichtigung spezieller Faktoren, beispielsweise eines erhöhten Abrasionsverhaltens des Compounds, gut möglich.

Die üblichen Vernetzungsmittel, beispielsweise organische Peroxide, werden gegebenenfalls im Zuge der Compoundierung zur Zusammensetzung hinzugefügt. Eine Vernetzung der Polymermatrix erfolgt nach bekannten Verfahren, zweckmäßigerweise nach der Formgebung bei erhöhter Temperatur. Die Vernetzung kann aber bei Anwesenheit geeigneter funktioneller Gruppen auch nach anderen Mechanismen erfolgen, beispielsweise über eine Hydrosilylierungsreaktion in Anwesenheit geeigneter Additionskatalysatoren.

Die erfindungsgemäße Zusammensetzung mit dem/r Glas/Glasur oder Ton wird bevorzugt in flammwidrigen Isoliermaterialien, besonders bevorzugt für Brandsicherheitskabel, und hier ganz besonders bevorzugt im Bereich der Aderisolationen, der gemeinsamen Aderumhüllungen oder Zwickel, der Trennschichten, d.h. der Schichten zwischen dem Leiter und der Isolation, der Zwischen- und Außenmäntel und der Beiläufe verwendet. Aber sie ist auch für die Verwendung als Füllmasse oder Trennschicht in Verbindungsmuffen und Verteilerdosen bzw. für Brandschutzverkleidungen im Bereich des vorbeugenden Brandschutzes prädestiniert (Anspruch 13).

Ein weiterer Gegenstand der Erfindung sind elektrische Adern oder ein- oder mehradrige elektrische Kabel mit Isolations- und/oder Funktionserhalt, die wenigstens einen Bestandteil auf der Basis einer keramisierbaren Zusammensetzung mit einer schmelzenden und wiedererstarrenden oder keramisierenden bzw. kristallisierenden, mineralischen Komponente nach einem der Ansprüche 1 bis 11 enthalten (Anspruch 14).

In einer bevorzugten Ausführungsform- liegen diese elektrischen Adern oder Kabel, die mindestens einen Bestandteil auf der Basis einer keramisierbaren Zusammensetzung mit einem/r Glas/Glasur besitzen, in Kombination mit einem Bestandteil aus Silikonkautschuk vor (Anspruch 15).

In einer weiteren bevorzugten Ausführungsform enthält die elektrische Ader oder das elektrische Kabel in dem Bestandteil, der auf der Basis der erfindungsgemäßen keramisierbaren Zusammensetzung gefertigt ist, zusätzlich eine mineralische Faser und liegt damit als Faserverbundstoff vor (Anspruch 16).

Eine ganz besonders bevorzugte Ausführungsform der elektrischen Ader oder des elektrischen Kabels liegt dann vor, wenn es sich bei dem Bestandteil auf der Basis der erfindungsgemäßen keramisierbaren Zusammensetzung um die Trennschicht, die auf den elektrischen Leiter aufgebracht wird, handelt (Anspruch 17).

In einer weiteren ganz besonders bevorzugten Ausführungsform ist die auf der Basis der erfindungsgemäßen keramisierbaren Zusammensetzung gefertigte Trennschicht für die elektrischen Ader oder Kabel mit einer aufgebrachten Isolationsschicht aus vorzugweise Silikonkautschuk oder anderem halogenfreien Kautschuk oder Kunststoffen, oder Mischungen auf deren Basis versehen (Anspruch 18).

Die auf Basis der erfindungsgemäßen Zusammensetzung erhaltenen Kabel unterscheiden sich bei der üblichen Instalation und Benutzung nicht von herkömmlichen Kabeln. Auch das Abisolieren der Leiter stellt kein Problem dar. Die pulverförmigen keramisierenden Füllstoffe sind durch ihre Einbettung in die polymere Matrix nicht als solche zu erkennen. Die Eigenschaften des Polymers bestimmen das Erscheinungsbild der Kabel. Die Aufarbeitung der keramisierenden Füllstoffe in einem Compound erlaubt ein Verarbeiten, wie es mit anderen herkömmlichen hochgefüllten Materialien bekannt ist. Die Kabel weisen sowohl bei üblichen Gebrauchstemperaturen als auch im keramisierten Zustand im Brandfall hervorragende mechanische Eigenschaften, insbesondere hohe Bruchdehnung und geringe Rißbildung (Abplatzungen) auf. Der erfindungsgemäße Polymercompound stellt ferner eine kostengünstige Alternative zu den bekannten verwendeten Materialien dar. Insbesondere kann die Verwendung kostspieliger Materialien, wie Glimmerbandagen, entfallen.

Die erfindungsgemäßen elektrischen Adern und Kabel werden durch die nachstehenden Figuren näher erläutert:

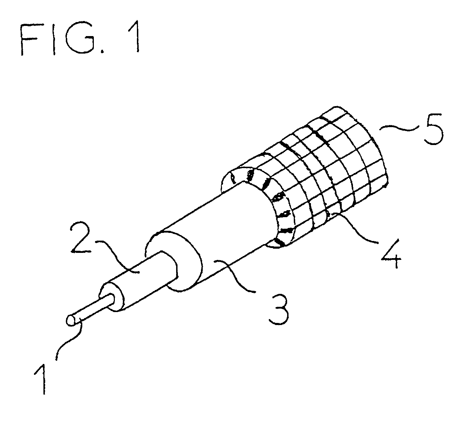

Fig. 1 stellt ein Beispiel für den Aufbau einer elektrischen Ader 5 dar. Die gezeigte Ader besteht aus einem elektrischen Leiter 1, einer Trennschicht 2 und einer Isolation 3 in Kombination mit einem Verstärkungsgewebe oder einem Geflecht 4, wobei entweder die Trennschicht 2 oder die Isolation 3 oder beide aus dem erfindungsgemäßen keramischen Polymercompound ausgebildet sind.

Bevorzugt besteht die auf den elektrischen Leiter 1 der Ader 5 aufgebrachte Trennschicht 2 aus der erfindungsgemäßen Zusammensetzung. Diese Trennschicht 2 kann im Brandfall die maßgebliche funktionserhaltende Schicht und gleichzeitig auch eine isolierende Schicht darstellen. Die Wandstärke einer Trennschicht hängt von den Anforderungen an den Funktionserhalt ab und beträgt zweckmäßig wenigstens 0,3 mm, bevorzugt wenigstens 0,4 mm. Über der Trennschicht 2 befinden sich die eigentliche Isolation 3 der elektrischen Ader 5 und ein Verstärkungsgewebe oder ein Geflecht 4, wobei die Reihenfolge von Isolation 3 und Verstärkungsgewebe oder Geflecht 4 über der Trennschicht 2 auch vertauscht sein kann. Die Isolation 3 kann aus allen hierfür üblichen und zulässigen Materialien, beispielsweise aus den auf diesem Gebiet bekannten halogenfreien vernetzbaren und unvernetzbaren Isolationsmaterialien, z.B. Ethylen-Propylen-Dien-Terpolymeren (EPDM-Kautschuken), bestehen. Vorteilhaft besteht die Isolation 3 aus einem Siliconkautschuk, so daß die Trennschicht 2 aus keramischem Polymercompound in eine Isolation aus Siliconkautschuk integriert ist. Die Isolation 3 kann aber auch selbst aus keramischem Polymercompound bestehen. In beiden Fällen wird eine weitere Verbesserung des Funktionserhalt erreicht. Gegebenenfalls wird die Isolation 3 mit einem Verstärkungsgewebe oder Geflecht 4 kombiniert, das aus einem nicht brennbaren mineralischen Werkstoff, vorzugsweise Mineralfasern aus Silikaten, Glas und Keramik, besteht.

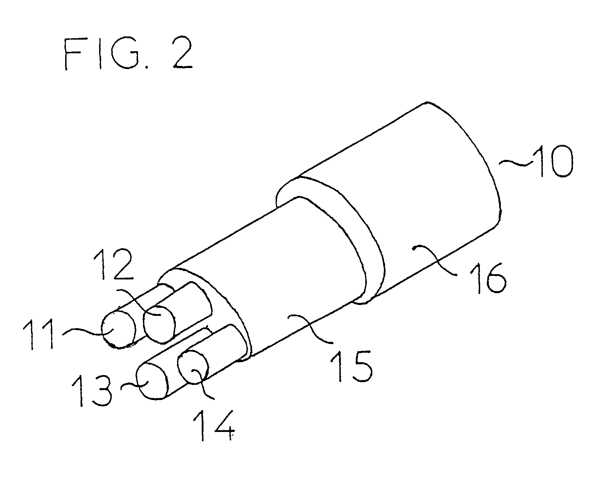

Fig. 2 stellt ein Beispiel für den Aufbau eines mehradrigen elektrischen Kabels 10 dar. Das Kabel 10 umfaßt elektrische Adern 11, 12, 13 und 14, eine gemeinsame Aderumhüllung bzw. einen Zwickel 15 und einen Außenmantel 16, der über der gemeinsamen Aderumhüllung 15 aufgebracht ist. Wenigstens ein Bestandteil dieses elektrischen Kabels ist auf Basis des erfindungsgemäßen Polymercompounds hergestellt. Üblicherweise enthalten die elektrischen Adern, die beispielsweise gemäß den in Fig. 1 dargestellten Adern 5 aufgebaut sein können, eine Trennschicht auf Basis der erfindungsgemäßen Zusammensetzung. In einer bevorzugten Ausführungsform umfaßt die gemeinsame Aderumhüllung (Zwickel) 15, allein oder zusammen mit den Trennschichten der Adern, den erfindungsgemäßen keramischen Polymercompound. Ein Zwickel aus einem flammwidrigen halogenfreien Polymercompound wird besonders bevorzugt eingesetzt. Gegebenenfalls wird der keramische Polymercompound hierbei in Kombination mit einem Geweband aus temperaturbeständigen mineralischen Werkstoffen eingesetzt. Der Außenmantel 16 besteht üblicherweise aus herkömmlichen Materialien, beispielsweise halogenfreien gefüllten Polymeren, kann aber alternativ ebenfalls unter Verwendung des keramischen Polymercompounds hergestellt sein.

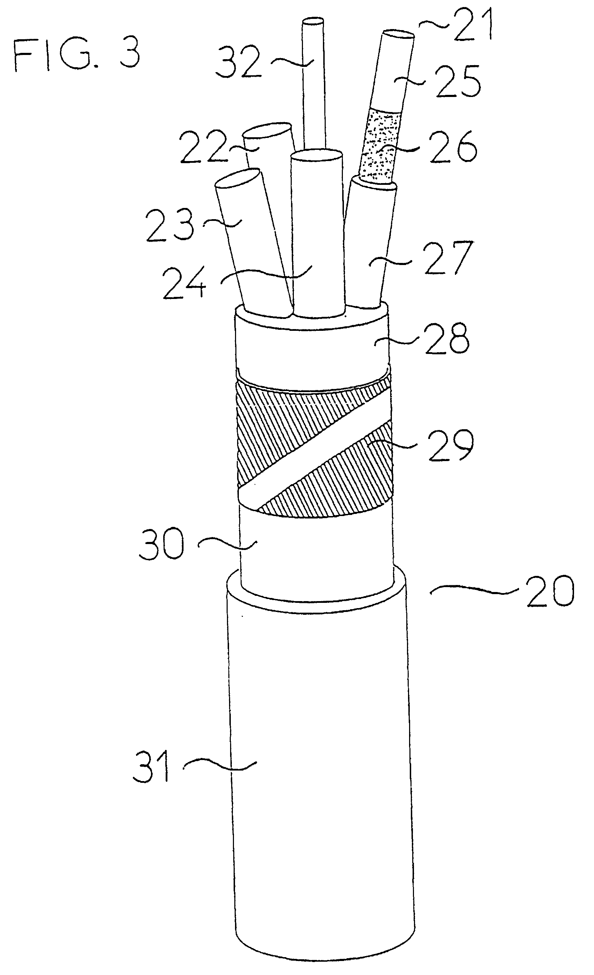

Fig. 3 stellt ein Beispiel für den Aufbau eines mehradrigen elektrischen Kabels 20 mit einem konzentrischen Leiter 29 dar.

Das dargestellte Kabel umfaßt vier Adern 21, 22, 23 und 24, die ihrerseits aus einem elektrischen Leiter 25, einer Trennschicht 26 und einer Isolation 27 bestehen. Die Adern können aber ebenso einen Aufbau gemäß der in Fig. 1 beschriebenen Ader 5 aufweisen. Das Kabel kann außerdem Beiläufe wie den hier dargestellten Zentrumsbeilauf 32 aufweisen. Adern und Beilauf sind von einer gemeinsamen Aderumhüllung bzw. einem Zwickel 28 umgeben. Über der gemeinsamen Aderumhüllung (Zwickel) 28 befindet sich ein konzentrischer elektrischer Leiter 29, beispielsweise ein umwundener Kupferdraht oder eine Kupferband-Wendel. Auf diesen elektrischen Leiter 29 ist eine weitere Trennschicht 30 aufgebracht, über der sich ein Mantel 31 befindet.

Erfindungsgemäß sind ein oder mehrere Komponenten eines derartigen elekrischen Kabels unter Verwendung des keramischen Polymercompounds hergestellt. In einer bevorzugten Ausführungsform besteht wenigstens eine der Trennschichten 26 und 30 aus dem erfindungsgemäßen keramischen Polymercompound. Bevorzugt besteht die Trennschicht 26 der elektrischen Ader aus keramischem Polymercompound und ist in eine Isolation 27 aus Siliconkautschuk integriert. In einer weiteren Ausführungsform ist die gemeinsame Aderumhüllung (Zwickel) 28 entweder allein oder zusammen mit dem Beilauf 32 auf Basis des keramischen Polymercompounds hergestellt. Der Außenmantel 31 besteht üblicherweise aus herkömmlichen Materialien, beispielsweise halogenfreien gefüllten Polymeren, kann aber alternativ ebenfalls unter Verwendung des keramischen Polymercompounds hergestellt sein.

Die vorliegende Erfindung wird durch die nachstehenden Beispiele näher erläutert:

Zubereitung der Mischungen:

300 bis 350 Gewichtsteile $Al_2O_3$ und 3 bis 10 Gewichtsteile aufgeschmolzenes Aluminiumstearat wurden - je nach Beispiel - mit einem Laborkneter vorgemischt. Anschließend wurde die jeweilige Mischung mit 100 Gewichtsteilen HTV-Silikonkautschuk, Härte Shore A 60, gegebenenfalls mit 10 bis 30 Gewichtsteilen Glasfritte oder kristallisierendem Passivierungsglas versetzt (so in den Beispielen 1 bis 12, dagegen wurde zu den Zusammensetzungen in den Vergleichsbeispielen 1 und 2 keine Glaskomponente hinzugefügt) und mit 1,5 Gewichtsteilen 2,4-Dichlorbenzoylperoxid compoundiert.

Alternativ kann aber die Compoundierung auch in einem einstufigen Prozeß durchgeführt werden. In diesem Fall werden die Füllstoffe abgewogen und gemeinsam in einem Rührmischer vermengt. Der Silikonkautschuk wird auf einer Walze als "Fell" ausgeknetet und anschließend das Füllstoffgemisch aufgegeben und dann eingearbeitet. Die Compoundierung erfolgt also auf einer Walze.

Beide Herstellungsverfahren führen zu weitgehend identischen Resultaten. Der zweistufige Herstellungsprozeß, der in den nachfolgenden Beispielen angewandt wurde, weist allerdings bessere Versuchsergebnisse bei den bei Raumtemperatur ermittelten Meßgrößen auf.

Durchführung der mechanischen Untersuchungen:

Die Compoundstränge (Durchmesser 2 mm) wurden mittels Stempeldrucktest auf ihre Strukturfestigkeit untersucht: Die Stränge wurden hierbei auf Temperaturen bis 900 °C erhitzt und nachfolgend wieder abgekühlt. Dabei liegt bei Temperaturen bis 500 °C ein kritischer Temperaturbereich vor. Das Silikon ist bei dieser Temperatur bereits vollständig verbrannt, die Keramisierungs- oder Schmelzreaktion hat aber noch nicht stattgefunden. Die Ergebnisse, die die ertragbare Last im Stempeldrucktest widerspiegeln, sind in Tabelle 1 wiedergegeben. Zusätzlich wurde auch das äußere Erscheinungsbild der Probenoberflächen näher charakterisiert. Zur Überprüfung der mechanischen Eigenschaften wurde ein runder Prüfling längs auf eine Stahlplatte (45x45 mm) gelegt und mit einem flachen Stempel aus Stahl (Durchmesser 12 mm) bis zum Bruch belastet. Die Auswertung erfolgt bei Bruch oder bei einer Durchmesserreduktion des runden Prüflings bis 1,0 mm.

Die Materialstränge mit einem Durchmesser von 2 mm +/-0,1 mm wurden nach firmeninternen Verfahren außerdem zur Bestimmung der Materialschwindung, des strukturellen Verhaltens und der mechanischen Eigenschaften nach der thermischen Behandlung verwendet. Hierfür wurde die Matrixkomponente bei 150 °C und einer Haltezeit von ca. 10-15 min in einem Wärmeschrank vernetzt.

Nach der Vernetzung wurden Stränge mit 20 cm Länge zugeschnitten, deren minimaler Biegedurchmesser bei Raumtemperatur ausgewertet wurde. Der gemessene Wert ist der Abstand d (in mm) zwischen den parallelen Abschnitten eines U-förmigen Halbbogenstrangabschnitts, bei dem gerade ein Anreißen an der Zugoberfläche des Stranges erfolgt. Ein Wert von d = 0 mm bedeutet, daß sich die Proben bis zur Anlage der beiden parallelen Schenkel ohne Anriß knicken lassen. Der jeweils gemessene Biegedurchmesser ist in der Tabelle 2 (Spalte B) für die gezeigten Zusammensetzungen angegeben.

Bei diesem Versuch ist festzuhalten, daß der Vernetzungszustand des Materials über der Gesamt-Stranglänge z.T. recht unterschiedlich ist und damit gewisse Streuungen bei mehrmaliger Versuchsausführung auftreten können. Auf Grund eines subjektiven Eindrucks scheint der minimale Biegedurchmesser eine erste Aussage über die Materialfestigkeit in einem Zerreißtest zu ermöglichen. Dabei gilt in erster Näherung: je geringer der minimale Biegedurchmesser, desto höher die Materialzugfestigkeit.

Die **lineare Schwindung** wurde mit Hilfe von vernetzten Strängen einer Länge von 20 cm bestimmt. Darauf erfolgte eine thermische Behandlung derart, daß die Stränge auf eine feuerfeste Platte eines Ofens gelegt wurden. Der Ofen wurde mit 50 K/min bis zu einer Endtemperatur von 1000 °C aufgeheizt. Die Haltezeit betrug 180 min, worauf sich eine freie Abkühlung anschloß. Die Materialschwindung wurde durch eine Messung der Stränge (mit der Länge L) vor und nach der thermischen Behandlung errechnet. Die Schwindung ergibt sich dabei aus der folgenden Formel

$$100\% - \frac{L\ [cm]\ x\ 100\%}{20\ cm}$$

Die Ergebnisse für die verschiedenen Zusammensetzungen in bezug auf diese Materialeigenschaft sind in der Tabelle 2 (Spalte D) angeführt.

Das **Aufreißverhalten** der vernetzten, 20 cm langen Stränge wurde gleichfalls nach der oben beschriebenen thermischen Behandlung untersucht (Tabelle 2, Spalte E). Hierzu wurden die erhitzten und darauf abgekühlten Materialien visuell untersucht und mit einer Klassifikation zwischen 0 und 5 bewertet. Als Kriterium wurde im wesentlichen die Rißöffnungsgeometrie an der Oberfläche in Zusammenhang mit der sichtbaren Rißtiefe herangezogen. Folgendes Bewertungsschema wurde zugrundegelegt:

0: keine Risse bzw. schuppenartige Abplatzungen
1: sehr leichte Risse bzw. schuppenartige Abplatzungen / sehr schmale Öffnung an der Oberfläche
2: stärkere Risse bzw. schuppenartige Abplatzungen / schmale Öffnung an der Oberfläche
3: starke Risse bzw. schuppenartige Abplatzungen / breite Öffnung an der Oberfläche
4: Übergang Risse bzw. schuppenartige Abplatzungen - V-förmige Aufplatzungen / sehr breite Öffnungen an der Oberfläche
5: sehr starke Aufplatzungen / vollständige Querschnittsdeformation

Außerdem wurde die Rißbildung, d.h. insbesondere die Art der Rißstrukturen in Zusammenhang mit der Oberflächenbeschaffenheit bewertet, wobei ebenfalls die oben beschrieben thermische Behandlung der Stränge angewandt wurde. Folgendes Bewertungsschema wurde verwendet:

S: schuppenartige Rißstrukturen bzw. Abplatzungen
R: Risse bzw. Aufplatzungen
B: örtlich eng begrenzte beulenförmige Erhebungen
B-R: zumeist kommt es auf der Kuppe der beulenförmigen Erhebungen zu einem Aufreißen des Materials

Die Ergebnisse der Versuche mit den verschiedenen Zusammensetzungen sind in der Tabelle 2 (Spalte F) wiedergegeben.

Die Ergebnisse der Beispiele zeigen, daß die Strukturfestigkeit (SF) dadurch verbessert werden kann, daß 30 phr kristallisierendes Passivierungsglas in die Zusammensetzung eingearbeitet werden. Eine optimale Strukturfestigkeit wird im Fall eines Füllstoffanteils von 350 phr erreicht (Versuchsbeispiel 6 in Tabelle 1). Eine Verringerung des Anteils an kristallisierendem Passivierungsglas bzw. an Füllstoff führt jeweils allein oder in Kombination zu einer Verschlechterung der Strukturfestigkeit (beispielsweise bei den Zusammensetzungen 9 und 10 in Tabelle 1). Dennoch ergeben sich deutlich bessere Werte für die Strukturfestigkeit als in den beiden Vergleichsversuchen.
Ein vergleichbares Ergebnis für die Strukturfestigkeit wird auch bei den Zusammensetzungen, die als Glaskomponenten Glasfritten aufweisen, beobachtet (Versuchsbeispiele 1 und 5 in Tabelle 1 die nicht im Bereich von Anspruch 1 liegen).

Zusammensetzungen mit einem hohen Anteil an Glaskomponente zeigen auch bei der Überprüfung anderer mechanischer Eigenschaften trotz ihrer erhöhten Festigkeit keine Nachteile beim Aufreißverhalten oder bei der Rißbildung gegenüber den Zusammensetzungen in den Vergleichsversuchen (Tabelle 2). Auch gegenüber den Zusammensetzungen in den Vergleichsversuchen zeichnen sich die Zusammensetzungen der Versuchsbeispiele 1 (20 phr Glasfritte ; nicht im Bereich von Anspruch 1) und 6, 7 bzw. 8 (in allen Fällen 30 phr kristallisierendes Passivierungsglas) durch die besten mechanischen Eigenschaften aus. Der Anteil an Füllstoff bleibt in bezug auf die Ergebnisse bei der Festigkeit im Zuge der manuellen Biege- und Bruchprüfung, in bezug auf das Aufreißverhalten und in bezug auf die Rißbildung ohne größere Bedeutung. Dagegen ist für das Maß der Materialschwindung auch der Füllstoffanteil bei einem gleichbleibenden Anteil der Glaskomponente wesentlich (bspw. Vergleich der Zusammensetzungen 2 und 5 in Tabelle 2 ; nicht im Bereich von Anspruch 1). Bei gleichem Anteil an Glaskomponente verstärkt sich die Materialschwindung mit abnehmendem Füllstoffanteil (s. bspw. Zusammensetzung 2 in Tabelle 2 ; nicht im Bereich von Anspruch 1).

Kabel und Ader der erfindungsgemäßen Art sind für gesteigerte Einsatzanwendungen geeignet und lassen eine abgespecktere Konstruktionsausführung bei mindestens gleicher Qualität zu. Insbesondere führt der Einsatz der erfindungsgemäßen Lehre bei Kabeln mit der Aufgabe des Funktionserhalts im Brandfall dazu, daß die funktionsgebende Schichtstärke bei Verwendung des erfindungsgemäßen Compounds mit einer niedrigschmelzenden Komponente um ca. 50% im Vergleich zu den Compounds aus dem Stand der Technik, also ohne die niedrigschmelzende Komponente, reduziert werden kann. Dies hat erhebliche apparative Vorteile, nämlich schlankere Kabel und eine bessere Handhabung, bei gleicher Qualität und verringert die Produktionskosten.

Tabelle 1: Strukturfestigkeit im Stempeldrucktest nach
thermischer Behandlung bei 900°C

| Mu-ster | Füll-stoff $Al_2O_3$* | Glas-art | Haftver-mittler | Stempel-druckbela-stung [N] |
|---|---|---|---|---|
| Num-mer | Menge [phr] | Menge [phr] | Menge [phr] | 900°C |
| 1** | 350 | C 20 | 8 | 195 |
| 2** | 300 | C 30 | 6 | 165 |
| 3** | 350 | C 10 | 6 | 188 |
| 4** | 300 | C 10 | 8 | 92 |
| 5** | 350 | C 30 | 10 | 132 |
| 6 | 350 | G 30 | 6 | 214 |
| 7 | 325 | G 30 | 10 | 138 |
| 8 | 300 | G 30 | 8 | 147 |
| 9 | 300 | G 10 | 6 | 90 |
| 10 | 350 | G 10 | 10 | 64 |
| 11** | 325 | C 10 | 10 | 60 |
| 12** | 300 | C 30 | 10 | 147 |

| Vgl.1 | 350 | - | 3 | 24 |
| Vgl.2 | 350 | - | 6 | 25 |

* zwei $Al_2O_3$-Typen wurden verwendet

Bemerkung: G: kristallisierendes Passivierungsglas,
$T_g \approx 530°C$
C: Glasfritte

** Beispiele 1-5, 11 und 12 liegen nicht im Bereich von Anspruch 1

Tabelle 2

| Vernetzter RT-Zustand | | | Zustand nach Aufheizen auf 1000°C und langsamem Abkühlen auf RT | | |
|---|---|---|---|---|---|
| **A** | **B** | **C** | **D** | **E** | **F** |
| 1* | ca.11 | | 2,5 | 0-1 | S/stellenweise leicht |
| 2* | ca. 5 | | 4,0 | 0-1 | R/sehr wenige |
| 3* | ca. 6 | | 1,5 | 1 | S |
| 4* | ca. 3 | | 5,5 | 4-5 | S/sehr stark |
| 5* | ca.13 | | 2,5 | 0-1 | -(B)/wenige leichte Beulen |
| 6 | ca. 6 | | 1,5 | 0 | - |
| 7 | ca. 6 | | 3,0 | 0 | - |
| 8 | ca. 2 | | 5,0 | 1 | S/feines Muster |
| 9 | ca. 1, z.T.0 | starke Quetschung, bis zu 3 | 4,5 | 2-3 | S |
| 10 | ca. 7 | | 4,5 | 1 | S/feines Muster |
| 11* | ca.10 | | 3,5 | 2-3 | S/feines Muster |
| 12* | ca.10 | | 2,0 | 0-1 | S/stellenweise leicht |
| Vgl.1 | ca. 6 | | 2,5 | 4 | |
| Vgl.2 | ca. 3 | | 0,5 | 0 | |

A: Mischnummer
B: minimaler Biegedurchmesser bei Anriß d (mm)
C: Quetschungen am Innenradius/Anzahl ertragbarer Wechselbiegungen
D: lineare Schwindung (%)
E: Aufreißverhalten (Skala von 0 bis 5)
F: Rißbild an der Oberfläche/Erläuterungen s. Text

   * Beispiele 1-5, 11 und 12 liegen nicht im Bereich von Anspruch 1

**Patentansprüche**

1. Keramisierbare flammwidrige Zusammensetzung, enthaltend mindestens ein siliziumorganisches Polymer und mindestens einen keramisierenden Füllstoff sowie eine schmelzende und wiedererstarrende oder schmelzende und keramisierende oder schmelzende und kristallisierende mineralische Komponente, deren Schmelzpunkt niedriger ist als die Sintertemperatur des keramisierenden Füllstoffs, **dadurch gekennzeichnet, daß** die mineralische Komponente ausgewählt ist aus einer Mischung, die aus Glasfritten und alkaliarmen Gläsern besteht und einen Schmelzpunkt von weniger als 750°C aufweist, und aus einem kristallisierenden Passivierungsglas mit einem Alkaligehalt von weniger als 600 ppm, das eine Schmelztemperatur von nicht höher als 710°C aufweist.

2. Zusammensetzung nach Anspruch 1, **dadurch gekennzeichnet, daß** sie mindestens ein Benetzungsmittel für den keramisierenden Füllstoff enthält.

3. Zusammensetzung nach Anspruch 1 oder 2, **dadurch gekennzeichnet, daß** die mineralische Komponente, deren Schmelzpunkt niedriger ist als die Sintertemperatur des keramisierenden Füllstoffs, als verteilte körnige Partikel in der Zusammensetzung eingearbeitet ist.

4. Zusammensetzung nach einem der vorgenannten Ansprüche, **dadurch gekennzeichnet, daß** der Anteil der mineralischen Komponente, deren Schmelzpunkt niedriger ist als die Sintertemperatur des keramisierenden Füllstoffs, mindestens 1,0 Gewichtsteile, vorzugsweise 1,0 bis 70 Gewichtsteile, pro 100 Gewichtsteile des/der siliziumorganischen Polymers/e beträgt.

5. Zusammensetzung nach einem der vorgenannten Ansprüche, **dadurch gekennzeichnet, daß** der keramisierende Füllstoff ein Oxid, vorzugsweise Aluminiumoxid ($Al_2O_3$), ist.

6. Zusammensetzung nach einem der vorgenannten Ansprüche, **dadurch gekennzeichnet, daß** der Anteil an keramisierendem Füllstoff in der Zusammensetzung wenigstens 50 Gewichtsteile pro 100 Gewichtsteile des/der siliziumorganischen Polymers/e beträgt.

7. Zusammensetzung nach einem der vorgenannten Ansprüche, **dadurch gekennzeichnet, daß** das Benetzungsmittel eine Metallseife, vorzugsweise eine Aluminiumseife ist.

8. Zusammensetzung nach einem der vorgenannten Ansprüche, **dadurch gekennzeichnet, daß** sie einen oder mehrere Hilfs- und/oder Zusatzstoffe, insbesondere zusätzliche nichtkeramisierende Füllstoffe und Vernetzungsmittel, umfaßt.

9. Zusammensetzung nach Anspruch 8, **dadurch gekennzeichnet, daß** der nichtkeramisierende Füllstoff ein Carbonat, insbesondere $CaCO_3$ und/oder $MgCO_3$, ist.

10. Zusammensetzung nach Anspruch 8, **dadurch gekennzeichnet, daß** das Vernetzungsmittel ein organisches Peroxid ist.

11. Zusammensetzung nach einem der vorgenannten Ansprüche, **dadurch gekennzeichnet, daß** sie mineralische Fasern, insbesondere Silikat-, Glas- oder Keramikfasern, umfaßt.

12. Verfahren zur Herstellung einer Zusammensetzung nach einem der vorgenannten Ansprüche, **dadurch gekennzeichnet, daß** man die schmelzende und wiedererstarrende oder schmelzende und keramisierende oder schmelzende und kristallisierende mineralische Komponente, deren Schmelzpunkt niedriger ist als die Sintertemperatur des keramisierenden Füllstoffs, zusammen mit dem keramisierenden Füllstoff, insbesondere auf einem Walzwerk oder einer Knetmaschine oder durch Extrusion, in die übrigen Bestandteile einarbeitet.

13. Verwendung einer Zusammensetzung nach einem der Ansprüche 1 bis 11 zur Herstellung von flammwidrigen Isoliermaterialien, insbesondere in Brandsicherheitskabeln vor allem als Trennschichten, Mäntel, gemeinsame Aderumhüllungen oder Zwickel, Isolationen oder Beiläufe, in Verbindungsmuffen oder in Verteilerdosen.

14. Elektrische Ader oder elektrisches Kabel mit Isolations- und/oder Funktionserhalt, welche(s) wenigstens einen Bestandteil auf der Basis der keramisierbaren Zusammensetzung mit mindestens einer schmelzenden und wiedererstarrenden oder schmelzenden und keramisierenden oder schmelzenden und kristallisierenden mineralischen Komponente nach einem der Ansprüche 1 bis 11 enthält.

**15.** Ader oder Kabel nach Anspruch 14, worin der Bestandteil auf Basis der keramisierbaren Zusammensetzung in Kombination mit einer Komponente aus Silikonkautschuk vorliegt.

**16.** Ader oder Kabel nach Anspruch 14 oder 15, worin der Bestandteil auf Basis der keramisierbaren Zusammensetzung eine mineralische Faser enthält und als Faserverbundstoff vorliegt.

**17.** Ader oder Kabel nach einem der Ansprüche 14 bis 16, worin der Bestandteil auf Basis der keramisierbaren Zusammensetzung eine auf den elektrischen Leiter aufgebrachte Trennschicht ist.

**18.** Ader oder Kabel nach Anspruch 17, worin auf die Trennschicht eine Isolationsschicht aus Silikonkautschuk, anderen halogenfreien Kautschuktypen, Kunststoffen oder Mischungen auf deren Basis aufgebracht ist.

**Claims**

**1.** Ceramisable fire-resistant composition containing at least one organosilicon polymer and at least one ceramising filler as well as a melting and resolidifying or melting and ceramising or melting and crystallising mineral component, the melting point of which is lower than the sintering temperature of the ceramising filler, **characterised in that** the mineral component is selected from a mixture which consists of glass frits and low-alkali glasses and has a melting point of less than 750°C, and from a crystallising passivation glass having an alkali content of less than 600 ppm, which has a melting temperature of not more than 710°C.

**2.** Composition according to claim 1, **characterised in that** it contains at least one wetting agent for the ceramising filler.

**3.** Composition according to claim 1 or 2, **characterised in that** the mineral component, the melting point of which is lower than the sintering temperature of the ceramising filler, is incorporated in the composition as dispersed grainy particles.

**4.** Composition according to one of the afore-mentioned claims, **characterised in that** the proportion of mineral component, the melting point of which is lower than the sintering temperature of the ceramising filler, is at least 1.0 parts by weight, preferably 1.0 to 70 parts by weight, per 100 parts by weight of the organosilicon polymer/s.

**5.** Composition according to one of the afore-mentioned claims, **characterised in that** the ceramising filler is an oxide, preferably aluminium oxide ($Al_2O_3$).

**6.** Composition according to one of the afore-mentioned claims, **characterised in that** the proportion of ceramising filler in the composition is at least 50 parts by weight per 100 parts by weight of the organosilicon polymer/s.

**7.** Composition according to one of the afore-mentioned claims, **characterised in that** the wetting agent is a metal soap, preferably an aluminium soap.

**8.** Composition according to one of the afore-mentioned claims, **characterised in that** it comprises one or more auxiliaries and/or additives, in particular additional non-ceramising fillers and cross-linking agents.

**9.** Composition according to claim 8, **characterised in that** the non-ceramising filler is a carbonate, in particular $CaCO_3$ and/or $MgCO_3$.

**10.** Composition according to claim 8, **characterised in that** the cross-linking agent is an organic peroxide.

**11.** Composition according to one of the afore-mentioned claims, **characterised in that** it comprises mineral fibres, in particular silicate, glass or ceramic fibres.

**12.** Process for producing a composition according to one of the afore-mentioned claims, **characterised in that** the melting and resolidifying or melting and ceramising or melting and crystallising mineral component, the melting point of which is lower than the sintering temperature of the ceramising filler, together with the ceramising filler, is incorporated into the remaining constituents, in particular on a rolling mill or a kneading machine or by extrusion.

13. Use of a composition according to one of claims 1 to 11 for producing fire-resistant insulating materials, in particular in fire-safety cables, above all as separating layers, casings, common wire sheaths or windings, insulation or accessories, in connecting sleeves or in distributor boxes.

14. Electrical wire or electrical cable with retention of insulating and/or functional properties, which contains at least one constituent based on the ceramisable composition having at least one melting and resolidifying or melting and ceramising or melting and crystallising mineral component according to one of claims 1 to 11.

15. Wire or cable according to claim 14, wherein the constituent based on the ceramisable composition is present in combination with a component made from silicone rubber.

16. Wire or cable according to claim 14 or 15, wherein the constituent based on the ceramisable composition contains a mineral fibre and is present as a fibre composite.

17. Wire or cable according to one of claims 14 to 16, wherein the constituent based on the ceramisable composition is a separating layer applied to the electrical conductor.

18. Wire or cable according to claim 17, wherein an insulating layer made from silicone rubber, other halogen-free types of rubber, plastics or mixtures based thereon, is applied to the separating layer.

**Revendications**

1. Composition réfractaire céramisable, contenant au moins un polymère organosilicié et au moins une matière de charge céramisante ainsi qu'un composant minéral se liquéfiant et se resolidifiant ou se liquéfiant et céramisant ou se liquéfiant et cristallisant, dont le point de fusion est plus bas que la température de frittage de la matière de charge céramisante, **caractérisée en ce que** le composant minéral est choisi entre un mélange qui se compose de frittes de verre et de verres faiblement alcalins et présente un point de fusion de moins de 750°C, et un verre de passivation cristallisant ayant un titre alcalimétrique de moins de 600 ppm qui présente une température de fusion ne dépassant pas 710 °C.

2. Composition selon la revendication 1, **caractérisée en ce qu'**elle contient au moins un agent mouillant pour la matière de charge céramisante.

3. Composition selon la revendication 1 ou 2, **caractérisée en ce que** le composant minéral dont le point de fusion est inférieur à la température de frittage de la matière de charge céramisante, est incorporé dans la composition sous la forme de particules granulées réparties.

4. Composition selon l'une quelconque des revendications précédentes, **caractérisée en ce que** la proportion du composant minéral dont le point de fusion est inférieur à la température de frittage de la matière de charge céramisante, se monte à au moins 1,0 partie en poids, de préférence 1,0 à 70 parties en poids, par 100 parties en poids du ou des polymères organosiliciés.

5. Composition selon l'une quelconque des revendications précédentes, **caractérisée en ce que** la matière de charge céramisante est un oxyde, de préférence un oxyde d'aluminium ($Al_2O_3$).

6. Composition selon l'une quelconque des revendications précédentes, **caractérisée en ce que** la proportion de matière de charge céramisante dans la composition se monte au moins à 50 parties en poids par 100 parties en poids du ou des polymères organosiliciés.

7. Composition selon l'une quelconque des revendications précédentes, **caractérisée en ce que** l'agent mouillant est un savon de métal, de préférence un savon d'aluminium.

8. Composition selon l'une quelconque des revendications précédentes, **caractérisée en ce qu'**elle comprend un ou plusieurs agents auxiliaires et/ou adjuvants, en particulier des matières de charge non céramisantes et des agents mouillants supplémentaires.

**9.** Composition selon la revendication 8, **caractérisée en ce que** la matière de charge non céramisante est un carbonate, en particulier $CaCO_3$ et/ou $MgCO_3$.

**10.** Composition selon la revendication 8, **caractérisée en ce que** l'agent mouillant est un peroxyde organique.

**11.** Composition selon l'une quelconque des revendications précédentes, **caractérisée en ce qu'**elle comprend des fibres minérales, en particulier des fibres silicieuses, de verre ou céramiques.

**12.** Procédé de préparation d'une composition selon l'une quelconque des revendications précédentes, **caractérisé en ce que** l'on incorpore le composant minéral se liquéfiant et se resolidifiant ou se liquéfiant et céramisant ou se liquéfiant et cristallisant, dont le point de fusion est inférieur à la température de frittage de la matière de charge céramisante, dans les autres constituants avec la matière de charge céramisante, en particulier sur un laminoir ou dans une pétrisseuse ou par extrusion.

**13.** Utilisation d'une composition selon l'une quelconque des revendications 1 à 11 destinée à la fabrication de matériaux isolants réfractaires, en particulier dans des câbles de sécurité au feu surtout comme couches de séparation, gaines, enveloppes de fils ou bourrages communs, isolants ou bourrages, dans des manchons de connexion ou des boîtes de distribution.

**14.** Fil électrique ou câble électrique à conservation de l'isolement et/ou de la fonction, qui contient au moins un constituant à base de la composition céramisable à au moins un composant minéral se liquéfiant et se resolidifiant ou se liquéfiant et céramisant ou se liquéfiant et cristallisant selon l'une quelconque des revendications 1 à 11.

**15.** Fil ou câble selon la revendication 14, dans lequel le constituant à base de la composition céramisable est présent en combinaison avec un composant en caoutchouc de silicone.

**16.** Fil ou câble selon la revendication 14 ou 15, dans lequel le constituant à base de la composition céramisable contient une fibre minérale et est présent sous la forme de matériau composite renforcé par des fibres.

**17.** Fil ou câble selon l'une quelconque des revendications 14 à 16, dans lequel le constituant à base de la composition céramisable est une couche de séparation appliquée sur le conducteur électrique.

**18.** Fil ou câble selon la revendication 17, dans lequel une couche isolante en caoutchouc de silicone, en d'autres types de caoutchouc sans halogènes, en matières synthétiques ou en mélanges basés sur ces substances est appliquée sur la couche de séparation.

FIG. 1

FIG. 2

FIG. 3

32
21
25
22
26
23
24
27
28
29
30
20
31